# EUROPEAN PATENT APPLICATION

(11) **EP 4 696 401 A1**
(43) Date of publication of application: **18.02.2026**
(21) Application number: 24788598.1
(22) Date of filing: 29.03.2024
(51) Int. Cl.: B01D 53/04, C01B 32/50

(54) **ACIDIC-GAS COLLECTION SYSTEM AND ACIDIC-GAS COLLECTION METHOD**

(30) Priority: 12.04.2023 JP 2023064971
(71) Applicant: NGK Insulators, Ltd., Nagoya-shi, Aichi 467-8530 (JP)
(72) Inventor: ANDO Junichi, Nagoya-shi, Aichi 467-8530 (JP); OKUMA Yusuke, Nagoya-shi, Aichi 467-8530 (JP); IIDA Kazuki, Nagoya-shi, Aichi 467-8530 (JP); TAKAHASHI Michio, Nagoya-shi, Aichi 467-8530 (JP); KAN Hirofumi, Nagoya-shi, Aichi 467-8530 (JP)
(74) Representative: MERH-IP Matias Erny Reichl Hoffmann Patentanwälte PartG mbB
(86) International application number: PCT/JP2024/013063
(87) International publication number: WO 2024/214570

(57) **Abstract**

Provided is an acid gas capture system and an acid gas capture method that enable capturing a high-purity acid gas with excellent capture efficiency. An acid gas capture system according to an embodiment of the present disclosure includes: an acid gas adsorption part including an acid gas adsorption material capable of adsorbing an acid gas contained in a gas to be treated and capable of desorbing the adsorbed acid gas; a housing part, which includes a first flow passage to which the gas to be treated is supplied, and which houses the acid gas adsorption part so that the acid gas adsorption part is positioned in the first flow passage; and a return part including a return flow passage through which at least part of the acid gas desorbed from the acid gas adsorption material and discharged from the acid gas adsorption part is allowed to be returned to the first flow passage of the housing part.

## Description

### Technical Field

The present disclosure relates to an acid gas capture system and an acid gas capture method.

### Background Art

In recent years, an attempt has been made to separate and capture an acid gas, such as carbon dioxide (hereinafter sometimes referred to as "CO₂"), from the atmosphere in order to reduce an environmental load. As an acid gas capture device to be used for separation and capture of an acid gas, there has been proposed a gas separation unit including a gas adsorption part having a pellet structure (see, for example, Patent Literature 1). In such an acid gas capture device, an adsorption step of causing an acid gas adsorption material to adsorb an acid gas to separate the acid gas from the atmosphere, and a desorption step of heating a gas adsorption part to a predetermined desorption temperature to cause the acid gas adsorption material to desorb the acid gas, are performed in the stated order, to thereby capture the acid gas.

The captured acid gas can be used for various applications (for example, a raw material for synthetic fuel). Thus, it has been desired that the purity of an acid gas to be captured be improved. In view of the foregoing, it has been considered to perform a discharge step of discharging the atmosphere remaining in the acid gas capture device from the acid gas capture device after the adsorption step and before the desorption step. When the discharge step is performed, the amount of the atmosphere to be mixed with the acid gas to be captured is reduced, and hence there is a risk in that part of the acid gas may be desorbed to be discharged from the acid gas adsorption material in the discharge step, while the purity of the acid gas to be obtained can be improved. Thus, the capture efficiency of the acid gas may be decreased. That is, there is a trade-off relationship between the purity and the capture efficiency of the acid gas, and hence there is a problem in that the purity and the capture efficiency of the acid gas may not be sufficiently balanced.

### Citation List

### Patent Literature

[PTL 1] WO 2014/170184 A1

### Summary of Invention

### Technical Problem

A primary object of the present disclosure is to provide an acid gas capture system and an acid gas capture method that enable capturing a high-purity acid gas with excellent capture efficiency.

### Solution to Problem

[1] According to an embodiment of the present disclosure, there is provided an acid gas capture system, including an acid gas adsorption part, a housing part, and a return part. The acid gas adsorption part includes an acid gas adsorption material. The acid gas adsorption material is capable of adsorbing an acid gas contained in a gas to be treated and desorbing the adsorbed acid gas. The housing part includes a first flow passage to which the gas to be treated is supplied. The housing part is configured to house the acid gas adsorption part so that the acid gas adsorption part is positioned in the first flow passage. The return part includes a return flow passage through which at least part of the acid gas desorbed from the acid gas adsorption material and discharged from the acid gas adsorption part is allowed to be returned to the first flow passage of the housing part.
[2] In the acid gas capture system according to the above-mentioned item [1], the housing part may include a first inflow port, a first outflow port, and a second outflow port. The first inflow port is positioned in an upstream end portion in a supply direction of the gas to be treated in the above-mentioned housing part. The first outflow port is positioned in a downstream end portion in the supply direction of the gas to be treated in the above-mentioned housing part. The second outflow port is positioned between the first inflow port and the first outflow port.
[3] The acid gas capture system according to the above-mentioned item [1] or [2] may further include a first valve and a second valve. The first valve and the second valve are each capable of opening and closing the above-mentioned first flow passage. The first valve is positioned on an upstream side of the above-mentioned acid gas adsorption part in the supply direction of the above-mentioned gas to be treated. The second valve is positioned on a side opposite to the above-mentioned first valve with respect to the above-mentioned acid gas adsorption part. The first valve and the second valve may each be configured to partition the above-mentioned first flow passage to define a housing space in which the above-mentioned acid gas adsorption part is arranged, when the first valve and the second valve are in a closed state. The second outflow port is positioned between the first valve and the second valve. The return part may be capable of returning at least part of the acid gas discharged from the second outflow port to the housing space.
[4] The acid gas capture system according to the above-mentioned item [3] may further include a decompression device capable of decompressing the housing space.
[5] In the acid gas capture system according to any one of the above-mentioned items [1] to [4], the acid gas adsorption part and the housing part may be configured to form a first adsorption unit. The acid gas capture system may further include a second adsorption unit. The second adsorption unit further includes a second acid gas adsorption part and a second housing part. The second acid gas adsorption part includes an acid gas adsorption material capable of adsorbing an acid gas contained in a gas to be treated and capable of desorbing the adsorbed acid gas. The second housing part includes a second flow passage to which the gas to be treated is to be supplied. The second housing part is configured to house the second acid gas adsorption part so that the second acid gas adsorption part is positioned in the second flow passage. The return part may be configured to return at least part of the acid gas to the first flow passage of the housing part, and to supply the at least part of the acid gas to the second flow passage of the second housing part.
[6] In the acid gas capture system according to any one of the above-mentioned items [1] to [5], the acid gas may be carbon dioxide.
[7] According to another aspect of the present disclosure, there is provided an acid gas capture method, including an adsorption step, a discharge step, and a desorption step. In the adsorption step, a gas to be treated containing an acid gas is supplied to a first flow passage of a housing part in which an acid gas adsorption part including an acid gas adsorption material is arranged, to cause the acid gas adsorption material to adsorb the acid gas. In the discharge step, the temperature of the acid gas adsorption part is increased to a predetermined desorption temperature, and the gas to be treated is discharged from the acid gas adsorption part. In the desorption step, the acid gas is desorbed from the acid gas adsorption material under a state in which the acid gas adsorption part is maintained at the desorption temperature. In the discharge step, at least part of the acid gas desorbed from the acid gas adsorption material and discharged from the acid gas adsorption part at the time of the increase in temperature of the acid adsorption part is returned to the first flow passage.
[8] In the acid gas capture method according to the above-mentioned item [7], the discharge step may include a primary replacement step and a secondary replacement step. In the primary replacement step, a first gas is supplied to the above-mentioned first flow passage to replace an inside of the above-mentioned acid gas adsorption part from the gas to be treated to the first gas. In the secondary replacement step, the supply of the first gas to the above-mentioned first flow passage is maintained, and the temperature of the above-mentioned acid gas adsorption part is increased to a predetermined desorption temperature. In the secondary replacement step, a second gas containing the acid gas desorbed from the acid gas adsorption material at the time of the increase in temperature of the acid adsorption part and the first gas may be returned to the first flow passage.

### Advantageous Effects of Invention

According to the embodiment of the present disclosure, a high-purity acid gas can be captured with excellent capture efficiency.

### Brief Description of Drawings

FIG. **1A** is a schematic configuration view of an acid gas capture system according to one embodiment of the present disclosure.
FIG. **1B** is a schematic configuration view of an acid gas capture system according to another embodiment of the present disclosure.
FIG. 2 is a schematic configuration view of an acid gas adsorption part of each of the acid gas capture systems of FIG. **1A** and FIG. **1B****.**
FIG. 3 is a schematic perspective view of an acid gas adsorption part of an acid gas capture system according to still another embodiment of the present disclosure.
FIG. **4** is a longitudinal sectional view of the acid gas adsorption part of FIG. 3 taken along the center.
FIG. **5** is a schematic explanatory view for illustrating a primary replacement step of an acid gas capture method according to another aspect of the present disclosure.
FIG. **6A** is a schematic explanatory view for illustrating one embodiment of a secondary replacement step performed following the primary replacement step of FIG. **5****.**
FIG. **6B** is a schematic explanatory view for illustrating another embodiment of a secondary replacement step performed following the primary replacement step of FIG. **5****.**
FIG. **7A** is a schematic explanatory view for illustrating one embodiment of a desorption step performed following the secondary replacement step of FIG. **6A** or FIG. **6B****.**
FIG. **7B** is a schematic explanatory view for illustrating another embodiment of a desorption step performed following the secondary replacement step of FIG. **6A** or FIG. **6B****.**
FIG. **8** is an explanatory view for illustrating a temperature of an acid gas adsorption part in each step of an acid gas capture method according to another aspect of the present disclosure.
FIG. **9** is a schematic configuration view of an acid gas capture system according to still another embodiment of the present disclosure.

### Description of Embodiments

Embodiments of the present disclosure are described below with reference to the drawings. However, the present disclosure is not limited to these embodiments. For clearer illustration, some widths, thicknesses, shapes, and the like of respective portions may be schematically illustrated in the drawings in comparison to the embodiments. However, the widths, the thicknesses, the shapes, and the like are merely an example, and do not limit understanding of the present disclosure.

### A. Overview of Acid Gas Capture System

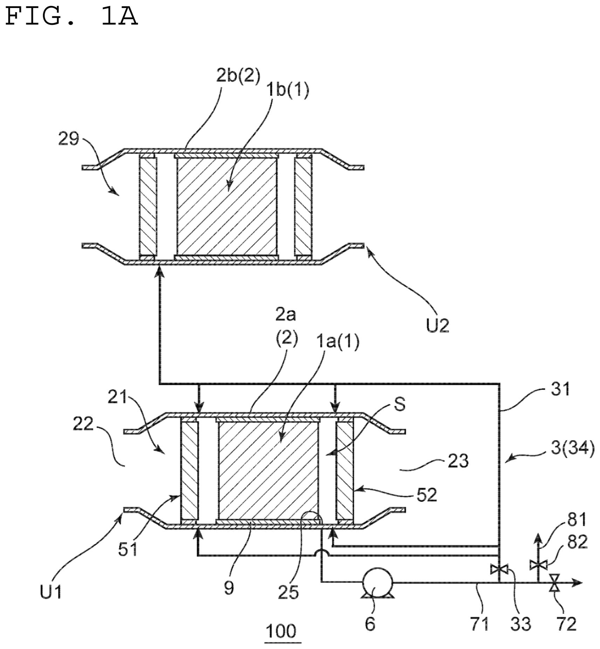

FIG. **1A** is a schematic configuration view of an acid gas capture system according to one embodiment of the present disclosure.

An acid gas capture system **100** of the illustrated example includes an acid gas adsorption part **1,** a housing part **2,** and a return part **3.** The acid gas adsorption part **1** includes an acid gas adsorption material. The acid gas adsorption material can adsorb an acid gas contained in a gas to be treated, and can desorb the adsorbed acid gas. The housing part **2** includes a first flow passage **21** to which the gas to be treated is to be supplied. In the illustrated example, the housing part **2** has a tubular shape extending in a supply direction of the gas to be treated. The housing part **2** houses the acid gas adsorption part **1** so that the acid gas adsorption part **1** is positioned in the first flow passage **21.** A return part **3** includes a return flow passage **34** through which at least part of the acid gas desorbed from the acid gas adsorption material and discharged from the acid gas adsorption part **1** is allowed to be returned to the first flow passage **21** of the housing part **2.**

With such a configuration, the acid gas capture system can perform an adsorption step, a discharge step, and a desorption step in the stated order, and can capture a high-purity acid gas with excellent capture efficiency. Specifically, when the gas to be treated containing the acid gas is supplied to the first flow passage of the housing part, the acid gas adsorption material in the acid gas adsorption part positioned in the first flow passage can adsorb the acid gas (adsorption step). After that, the supply of the gas to be treated to the first flow passage is stopped, and the temperature of the acid gas adsorption part is increased to a predetermined desorption temperature, and the gas to be treated can be discharged from the acid gas adsorption part (discharge step). In this case, part of the acid gas may be desorbed from the acid gas adsorption material and discharged from the acid gas adsorption part. In one embodiment, the acid gas capture system includes the return part, and hence even when the acid gas is desorbed from the acid gas adsorption material and discharged from the acid gas adsorption part in the discharge step, at least part of the acid gas can be returned to the first flow passage of the housing part through the return flow passage of the return part. Thus, the discharge of the acid gas desorbed unintentionally in the discharge step to the outside of the acid gas capture system can be prevented. Then, the acid gas is desorbed from the acid gas adsorption material under a state in which the acid gas adsorption part is maintained at the desorption temperature (desorption step). As a result, a high-purity acid gas (hereinafter sometimes referred to as "concentrated acid gas") can be captured with excellent capture efficiency.

The acid gas capture system 100 is typically configured to be able to heat the acid gas adsorption part **1.** In one embodiment, the acid gas capture system 100 includes a heating element **9.** The heating element **9** is in contact with the acid gas adsorption part **1.** When the acid gas capture system includes a heating element, the acid gas adsorption part can be directly heated, and hence the temperature of the acid gas adsorption part can be smoothly increased in the discharge step.

Examples of the heating element **9** include an electric heater, a steam heat exchanger (STM), and a heat exchanger using a heat medium. The acid gas capture system **100** may include a plurality of heating elements **9.** The plurality of heating elements **9** may all be the same or at least part thereof may be different. As a shape of the heating element **9,** any appropriate shape may be adopted. Examples of the shape of the heating element **9** include a flat plate shape, a spiral shape, and a film shape. In the illustrated example, the heating element **9** has a flat plate shape, and is arranged between the acid gas adsorption part **1** and the side wall of the housing part **2.**

Although not shown, the acid gas capture system 100 may include a heating medium supply part that can supply a heating medium (for example, water vapor and CO₂) to the acid gas adsorption part. Also with this configuration, the acid gas adsorption part can be heated.

In one embodiment, the housing part **2** includes a first inflow port **22,** a first outflow port **23,** and a second outflow port **25.** The first inflow port **22** is positioned in an upstream end portion in the supply direction of the gas to be treated in the housing part **2.** The first inflow port **22** allows passage of the gas to be treated in the adsorption step. The first outflow port **23** is positioned in a downstream end portion in the supply direction of the gas to be treated in the housing part **2.** The first outflow port **23** allows passage of the treated gas having the acid gas concentration reduced after passing through the acid gas adsorption part **1** in the adsorption step. The second outflow port **25** is positioned between the first inflow port **22** and the first outflow port **23.** The second outflow port **25** is typically arranged on the side wall of the housing part **2.** The second outflow port **25** can discharge the acid gas desorbed from the acid gas adsorption material in the discharge step and/or the desorption step.

With such a configuration, the first inflow port **22** through which the gas to be treated is allowed to pass in the adsorption step, the first outflow port **23** through which the treated gas passes in the adsorption step, and the second outflow port **25** through which the acid gas passes in the discharge step and/or the desorption step are separately arranged. Thus, the opening area of each of the first inflow port, the first outflow port, and the second outflow port can be appropriately designed in accordance with the flow rate in the corresponding step. As a result, the adsorption step, the discharge step, and the desorption step can be efficiently performed, respectively.

In one embodiment, the acid gas capture system **100** further includes a first valve **51** and a second valve **52.** Each of the first valve **51** and the second valve **52** can open and close the first flow passage **21.** The first valve **51** is positioned on an upstream side of the acid gas adsorption part **1** in the supply direction of the gas to be treated. The second valve **52** is positioned on a side opposite to the first valve **51** with respect to the acid gas adsorption part **1.** When the first valve **51** and the second valve **52** are in a closed state, the first valve **51** and the second valve **52** partition the first flow passage **21** to define a housing space **S** in which the acid gas adsorption part **1** is positioned. The second outflow port **25** is positioned between the first valve **51** and the second valve **52.** The return part **3** can return at least part of the acid gas discharged from the second outflow port 25 to the housing space **S.**

With such a configuration, when the discharge step is performed while the first valve and the second valve are set to be in a closed state, the acid gas desorbed from the acid gas adsorption material can be stably discharged from the second outflow port. Thus, the return part can stably return at least part of the acid gas discharged from the second outflow port, to the housing space in the discharge step.

Examples of the first valve **51** include a ball valve, a gate valve, and a butterfly valve. The first valve **51** is preferably a butterfly valve. The second valve **52** is described in the same manner as in the first valve **51.**

In one embodiment, the acid gas capture system **100** further includes an outflow line **71** and an on-off valve **72.** The outflow line **71** is typically a pipe that allows passage of a fluid discharged from the second outflow port **25.** An upstream end portion in a passage direction of the fluid in the outflow line **71** is connected to the side wall of the housing part **2** so as to be in communication with the second outflow port **25.** A downstream end portion in the passage direction of the fluid in the outflow line **71** may be connected to a tank that can store a high-purity acid gas (concentrated acid gas) although not shown. The on-off valve **72** is arranged in the outflow line **71,** and can open and close the outflow line **71.** Examples of the on-off valve **72** include a ball valve, a gate valve, and a butterfly valve.

In one embodiment, the acid gas capture system 100 further includes a decompression device **6.** The decompression device **6** can decompress the housing space **S** in which the acid gas adsorption part 1 is positioned. Thus, in the discharge step, the gas to be treated can be sucked to be removed from the housing space, and as a result, the gas to be treated can be smoothly discharged from the acid gas adsorption part.

The decompression device **6** can typically decompress the housing space **S** through the second outflow port **25.** Thus, in the discharge step, the gas to be treated can be smoothly discharged from the second outflow port, and when the acid gas is desorbed from the acid gas adsorption material, the acid gas can be discharged from the second outflow port. In addition, in the desorption step, a high-purity acid gas (concentrated acid gas) can be smoothly captured from the second outflow port. Examples of the decompression device **6** include a decompression pump and a blower.

The decompression device **6** may be arranged at any appropriate position. In the illustrated example, the decompression device **6** is arranged in the outflow line **71,** and is positioned on the upstream side of the on-off valve **72** in the passage direction of the fluid in the outflow line **71.**

In one embodiment, at least any one of the housing part **2,** the first valve **51,** and the second valve **52** is provided with a local gap and/or a supply port in communication with the first flow passage **21** (more specifically, the housing space **S).** The return part **3** can typically supply a fluid containing an acid gas to the above-mentioned local gap and/or supply port. In such a configuration, when the decompression device **6** decompresses the housing space **S,** the fluid supplied from the return part 3 flows into the housing space **S** under reduced pressure through the above-mentioned local gap and/or supply port. Thus, in the discharge step, the heat quantity of the fluid to be returned (specifically, a second gas) can be effectively utilized.

In one embodiment, the return part **3** includes a return line **31.**

The return line 31 is typically a pipe that returns a fluid containing an acid gas to the first flow passage **21** (more specifically, the housing space **S)** of the housing part **2** in the discharge step. In the illustrated example, an upstream end portion in a return direction of the return line **31** is connected to a portion between the decompression device **6** and the on-off valve **72** in the outflow line **71.** The return line **31** is branched into a plurality of portions, and a downstream end portion in the return direction of the return line **31** is connected to the housing part **2** so as to be in communication with the first flow passage **21** (more specifically, the housing space **S).** The return line **31** may be connected to the housing part **2** through another member. Typically, the internal space of the return line **31** forms the return flow passage **34.**

In one embodiment, the return part **3** further includes an on-off valve **33.** The on-off valve **33** is arranged in the return line **31,** and can open and close the return line **31.** In the illustrated example, the on-off valve **33** is arranged on an upstream side of the branched portion of the return line **31** in the return direction of the return line **31.** Examples of the on-off valve 33 include a ball valve, a gate valve, and a butterfly valve.

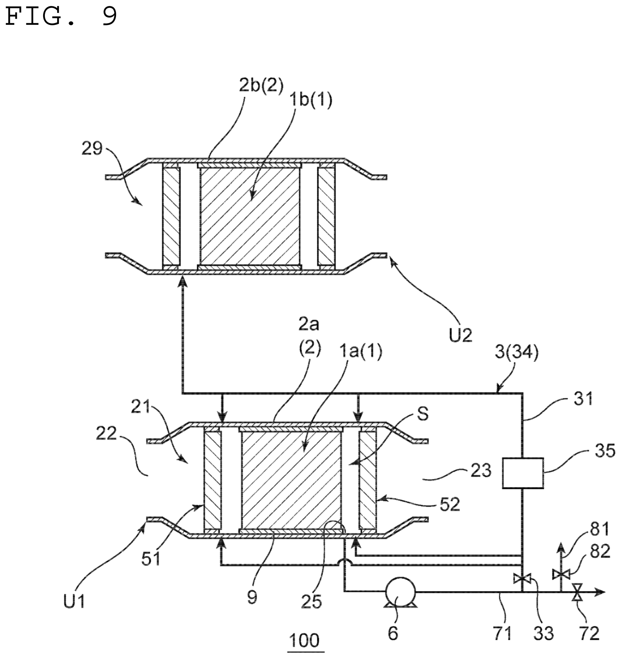

As illustrated in FIG. **9****,** the return part **3** may further include a storage tank **35.**

The storage tank **35** is typically arranged in the return line **31,** and is in communication with the return flow passage **34.** In the illustrated example, the storage tank **35** is positioned on a downstream side of the on-off valve **33** in the return direction of the return line **31.** The storage tank **35** can store a fluid containing an acid gas flowing thereinto from the return line **31.**

When the return part includes the storage tank, the captured acid gas (captured gas) can be returned to the first flow passage of the housing part at a stable flow rate and pressure.

As illustrated in FIG. **1A****,** in one embodiment, the acid gas capture system **100** further includes an exhaust line **81** and an on-off valve **82.** The exhaust line **81** is typically a pipe that discharges a first gas (purge gas) in a primary replacement step (described later). An upstream end portion in a discharge direction of the first gas in the exhaust line **81** is connected to a portion between the decompression device 6 and the on-off valve **72** in the outflow line **71.** The on-off valve **82** is arranged in the exhaust line **81** and can open and close the exhaust line **81.** Examples of the on-off valve **82** include a ball valve, a gate valve, and a butterfly valve.

The number of the acid gas adsorption part **1** and the housing part **2** of the acid gas capture system **100** is not particularly limited. The acid gas capture system **100** may include a plurality of acid gas adsorption parts **1** and a plurality of housing parts **2.** In other words, the acid gas capture system 100 may include a plurality of adsorption units U each including the acid gas adsorption part **1** and the housing part 2 that houses the acid gas adsorption part **1.** Specifically, the plurality of adsorption units **U** may include a first adsorption unit **U1** to an n-th adsorption unit Un. The "n" represents an integer of 2 or more.

In the embodiment illustrated in FIG. **1A****,** the acid gas capture system **100** includes the first adsorption unit **U1** and the second adsorption unit **U2.** The first adsorption unit **U1** includes a first acid gas adsorption part **1a** and a first housing part **2a** that houses the first acid gas adsorption part **1a.** The second adsorption unit **U2** includes a second acid gas adsorption part **1b** and a second housing part **2b** that houses the second acid gas adsorption part **1b.**

In this case, the return part **3** may return the acid gas discharged from the first acid gas adsorption part **1a** to the first flow passage **21** of the first housing part **2a,** and may supply the acid gas to a second flow passage **29** of the second housing part **2b.** In the illustrated example, at least one of the downstream end portions of the branched return line **31** is connected to the second housing part **2b.**

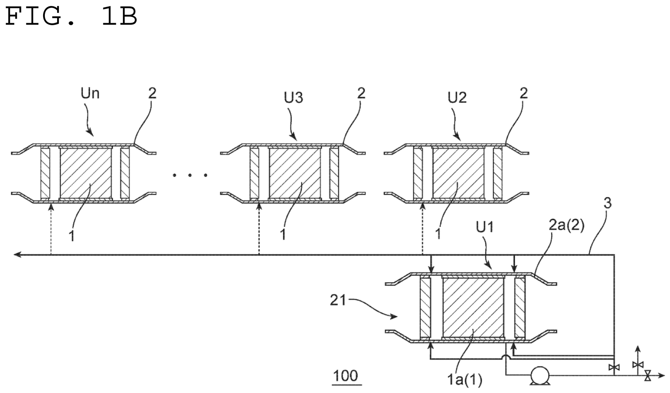

In addition, as illustrated in FIG. **1B****,** the acid gas capture system **100** may include three or more adsorption units (in the illustrated example, the first adsorption unit **U1,** the second adsorption unit **U2,** the third adsorption unit **U3,** ... the n-th adsorption unit **Un).** In this case, the return part 3 can return the acid gas discharged from the first acid gas adsorption part **1a** to the first flow passage **21** of the first housing part **2a,** and can supply the acid gas to the n-th flow passage of the housing part 2 of each of the adsorption units **U** excluding the first adsorption unit **U1.**

Examples of the acid gas contained in the gas to be treated of the acid gas capture system include carbon dioxide (CO₂), hydrogen sulfide, sulfur dioxide, nitrogen dioxide, dimethyl sulfide (DMS), and hydrogen chloride. In one embodiment, the acid gas is carbon dioxide (CO₂), and the gas to be treated is a CO₂-containing gas. The CO₂-containing gas may also contain nitrogen in addition to CO₂. The CO₂-containing gas is typically air (atmosphere). The CO₂ concentration in the CO₂-containing gas before being supplied to the acid gas capture system is, for example, 100 ppm (on a volume basis) or more and 2 vol% or less.

Now, description is given in detail of a case in which the acid gas is carbon dioxide (CO₂) .

When the acid gas is CO₂, the acid gas adsorption material included in the acid gas adsorption part is a carbon dioxide adsorption material.

Any appropriate compound capable of adsorbing and desorbing CO₂ may be adopted as the carbon dioxide adsorption material. Examples of the carbon dioxide adsorption material include: nitrogen-containing compounds; alkali compounds, such as sodium hydroxide and potassium hydroxide; carbonate salts, such as calcium carbonate and potassium carbonate; hydrogen carbonate salts, such as calcium hydrogen carbonate and potassium hydrogen carbonate; metal organic frameworks (MOF), such as MOF-74, MOF-200, and MOF-210; ionic liquids; deep eutectic solvents; oxides, such as cerium oxide and iron oxide; zeolite; activated carbon; and nitrogen-doped carbon. Those carbon dioxide adsorption materials may be used alone or in combination thereof.

Of such carbon dioxide adsorption materials, a nitrogen-containing compound and an ionic liquid are preferred.

More specific examples of the nitrogen-containing compound include: primary amines, such as monoethanolamine and polyvinylamine; secondary amines, such as diethanolamine, a cyclic amine, and N-(3-aminopropyl)diethanolamine; tertiary amines, such as methyldiethylamine and triethanolamine; ethyleneamine compounds such as tetraethylenepentamine; aminosilane coupling agents, such as aminopropyltrimethoxysilane, 3-aminopropyltriethoxysilane, N-(2-aminoethyl)-3-aminopropyltrimethoxysilane, and polyethyleneimine-trimethoxysilane; ethyleneimine; linear polyethyleneimines; branched polyethyleneimines each having a primary amino group to a tertiary amino group; piperazine compounds such as 1-(2-hydroxyethyl) piperazine; polyamidoamine; polyvinylamine; and organic/inorganic compounds each having an amino group added as a substituent thereto.

Of the carbon dioxide adsorption materials, methyldiethylamine, monoethanolamine, a cyclic amine, diethanolamine, tetraethylenepentamine, ethyleneimine, a linear polyethyleneimine, a branched polyethyleneimine, and an organic/inorganic compound having an amino group added as a substituent thereto are preferred.

Such nitrogen-containing compounds may be used alone or in combination thereof.

The ionic liquid is a "salt" of a liquid formed only of an ion (an anion or a cation), and is in a liquid state under normal temperature and normal pressure (23°C, 0.1 MPa). Examples of the cation of the ionic liquid include: an ammonium-based ion, such as an imidazolium salt or a pyridinium salt; a phosphoniumbased ion; a sulfonium salt; and an inorganic-based ion. Examples of the anion of the ionic liquid include: a halogenbased ion, such as a bromide ion or a triflate ion; a boronbased ion such as a tetraphenylborate ion; a phosphorus-based ion such as a hexafluorophosphate ion; and a sulfur-based ion such as an alkyl sulfonate ion. Of the ionic liquids, a combination of an imidazolium salt serving as a cation and a triflate ion serving as an anion is preferred.

The ionic liquid is more preferably used in combination with a carbon dioxide adsorption material other than the ionic liquid (hereinafter referred to as "another carbon dioxide adsorption material"). In this case, the ionic liquid is applied to another carbon dioxide adsorption material (for example, a nitrogen-containing compound). Thus, the performance of the carbon dioxide adsorption material can be improved, and the lifetime thereof can be extended.

The content ratio of the ionic liquid is, for example, 0.000001 part by mass or more, preferably 0.00001 part by mass or more, and is, for example, 0.1 part by mass or less, preferably 0.05 part by mass or less with respect to 1 part by mass of another carbon dioxide adsorption material. When the content ratio of the ionic liquid falls within the above-mentioned ranges, the performance of the carbon dioxide adsorption material can be stably improved, and the lifetime thereof can be stably extended.

A specific configuration of the acid gas adsorption part is described below.

### B. Acid Gas Adsorption Part

### B-1. First Embodiment of Acid Gas Adsorption Device

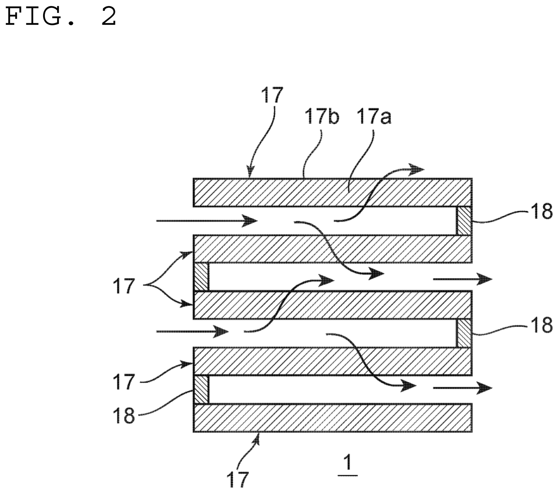

In one embodiment, as illustrated in FIG. 2, the acid gas adsorption part 1 includes a plurality of gas adsorption parts 17.

The plurality of gas adsorption parts 17 are stacked in a thickness direction thereof so as to be spaced apart from each other. A flow passage is formed between adjacent gas adsorption parts 17 among the plurality of gas adsorption parts 17. In the illustrated example, five gas adsorption parts 17 are arranged in parallel. However, the number of the gas adsorption parts 17 is not limited thereto. The number of the gas adsorption parts **17** is, for example, 5 or more, preferably 10 or more, more preferably 20 or more. A distance between adjacent gas adsorption parts 17 among the plurality of gas adsorption parts 17 is, for example, 0.5 cm or more and 1.5 cm or less.

Each of the plurality of gas adsorption parts **17** includes a plurality of pellet-like adsorption materials 17a and a flexible fiber member **17b.**

The pellet-like adsorption material **17a** serves as an acid gas adsorption material, and typically serves as a carbon dioxide adsorption material. Examples of a material for the pellet-like adsorption material **17a** include a material modified with the above-mentioned acid gas adsorption material, preferably cellulose modified with the above-mentioned acid gas adsorption material, more preferably nanofibrillated cellulose modified with the above-mentioned acid gas adsorption material. A mean primary particle diameter of the pellet-like adsorption material **17a** is, for example, 60 µm or more and 1,200 µm or less. Any appropriate value may be used as a filling ratio of the pellet-like adsorption materials **17a** in the gas adsorption parts **17.**

The flexible fiber member **17b** is typically formed in a hollow shape (bag shape) that allows the plurality of pellet-like adsorption materials **17a** to be housed therein. The flexible fiber member 17b allows passage of a gas and regulates passage of the pellet-like adsorption material. The flexible fiber member 17b may be a fabric or a non-woven fabric. Examples of a material for the flexible fiber member 17b include organic fibers and natural fibers, preferably, a polyethylene terephthalate fiber, a polyethylene fiber, and a cellulose-based fiber. A thickness of the flexible fiber member **17b** is, for example, 25 µm or more and 500 µm or less.

The acid gas adsorption part **1** of the illustrated example further includes a plurality of spacers **18.** The spacer **18** is located between adjacent gas adsorption parts **17** among the plurality of gas adsorption parts **17.** With this configuration, a distance between adjacent adsorption material layers among the adsorption material layers can be stably ensured. In one embodiment, the plurality of gas adsorption parts **17** and the plurality of spacers **18** are arranged in a substantially zig-zag pattern when viewed from a direction (depth direction on the drawing sheet of FIG. **2****)** orthogonal to the thickness direction of the gas adsorption parts **17.**

As the acid gas adsorption part 1 as described above, there is, for example, a gas separation unit as described in WO 2014/170184 A1. The publication is incorporated herein in its entirety by reference.

### B-2. Second Embodiment of Gas Adsorption Device

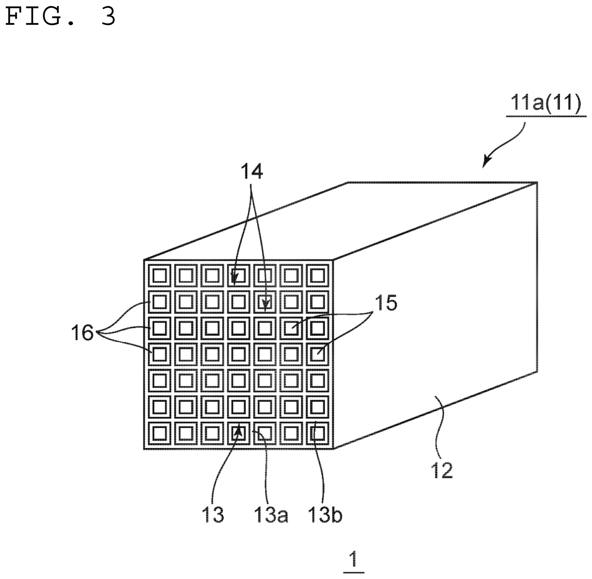

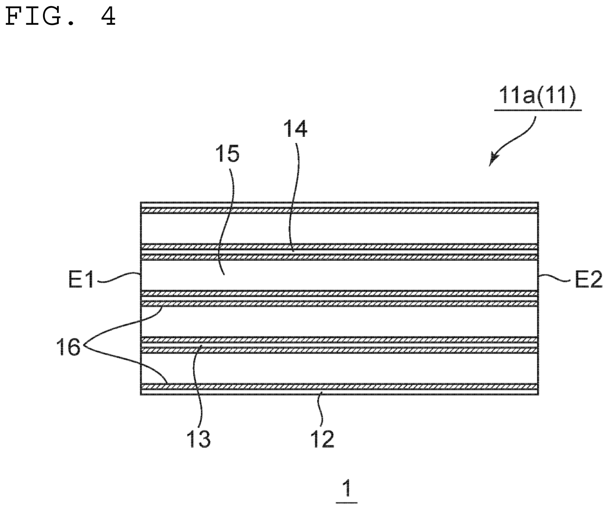

In another embodiment, as illustrated in FIG. **3** and FIG. **4****,** the acid gas adsorption part **1** includes a base material **11** and acid gas adsorption material layers **16.**

The structure of the base material **11** is not particularly limited, and is, for example, a honeycomb-like structure, a filter structure such as a filtration cloth, or a pellet structure. The acid gas adsorption material layer **16** is not particularly limited as long as the layer is arranged on the surface of any such base material **11.**

### B-2-1. Honeycomb-like Base Material

In one embodiment, the base material **11** is a honeycomb-like base material **11a.** The honeycomb-like base material **11a** includes partition walls **13** that define a plurality of cells **14.**

The cells **14** each extend from a first end surface **E1** (inflow end surface) of the honeycomb-like base material **11a** to a second end surface **E2** (outflow end surface) thereof in the lengthwise direction (axial direction) of the honeycomb-like base material **11a** (see FIG. **4****).** The cells **14** each have any appropriate shape in a cross section in a direction perpendicular to the lengthwise direction of the honeycomb-like base material **11a.** The sectional shapes of the cells are each, for example, a triangle, a quadrangle, a pentagon, a hexagon, a higher polygon, a circle, or an ellipse. The sectional shapes and sizes of the cells may be all the same, or may be at least partly different. Of such sectional shapes of the cells, for example, a hexagon or a quadrangle is preferred, and a square, a rectangle, or a hexagon is more preferred.

A cell density in a cross section in the direction perpendicular to the lengthwise direction of the honeycomb-like base material (specifically, the number of cells **14** per unit area) may be appropriately set in accordance with purposes. The cell density may be, for example, from 4 cells/cm² to 320 cells/cm². When the cell density falls within such range, the strength and effective geometric surface area (GSA) of the honeycomb-like base material can be sufficiently ensured.

The honeycomb-like base material **11a** has any appropriate shape (overall shape). The shape of the honeycomb-like base material is, for example, a cylinder with a circle as its bottom, an elliptic cylinder with an ellipse as its bottom, a prismatic column with a polygon as its bottom, or a column with an indefinite shape as its bottom. The honeycomb-like base material **11a** of the illustrated example has a prismatic columnar shape. The outer diameter and length of the honeycomb-like base material may be appropriately set in accordance with purposes. The honeycomb-like base material may have a hollow region in a center portion thereof in the cross section in the direction perpendicular to the lengthwise direction, though the hollow region is not shown.

The honeycomb-like base material **11a** typically includes: an outer wall **12;** and a partition wall 13 positioned inside the outer wall **12.** In the illustrated example, the outer wall **12** and the partition wall **13** are integrally formed. The outer wall **12** and the partition wall **13** may be separate bodies.

In the illustrated example, the outer wall **12** has a rectangular cylindrical shape. The thickness of the outer wall **12** may be set to any appropriate thickness. The thickness of the outer wall **12** is, for example, from 0.1 mm to 10 mm.

The partition wall **13** defines the plurality of cells **14.** More specifically, the partition wall **13** has a first partition wall **13a** and a second partition wall **13b** perpendicular to each other, and the first partition wall **13a** and the second partition wall **13b** define the plurality of cells **14.** The sectional shapes of the cells **14** are each a substantially quadrangular shape. The configuration of the partition wall is not limited to the partition wall **13** described above. The partition wall may have a first partition wall extending in a radial direction and a second partition wall extending in a circumferential direction, which define a plurality of cells.

The thickness of the partition wall **13** may be appropriately set in accordance with the applications of the acid gas adsorption device. The thickness of the partition wall **13** is typically smaller than the thickness of the outer wall **12.** The thickness of the partition wall **13** is, for example, from 0.03 mm to 0.6 mm. The thickness of the partition wall is measured, for example, through sectional observation with a scanning electron microscope (SEM). When the thickness of the partition wall falls within such range, the honeycomb-like base material can achieve sufficient mechanical strength, and can also achieve a sufficient opening area (total area of the cells in a cross section).

The porosity of the partition wall **13** may be appropriately set in accordance with purposes. The porosity of the partition wall **13** is, for example, 15% or more, preferably 20% or more, and is, for example, 70% or less, preferably 45% or less. The porosity may be measured, for example, by mercury porosimetry.

The bulk density of the partition wall **13** may be appropriately set in accordance with purposes. The bulk density is, for example, 0.10 g/cm³ or more, preferably 0.20 g/cm³ or more, and is, for example, 0.60 g/cm³ or less, preferably 0.50 g/cm³ or less. The bulk density may be measured, for example, by mercury porosimetry.

A material for forming the partition wall **13** is typically, for example, a ceramic. Examples of the ceramic include silicon carbide, a silicon-silicon carbide-based composite material, cordierite, mullite, alumina, silicon nitride, spinel, a silicon carbide-cordierite-based composite material, lithium aluminum silicate, and aluminum titanate. Those materials for forming the partition walls may be used alone or in combination thereof. Of those materials for forming the partition walls, for example, cordierite, alumina, mullite, silicon carbide, a silicon-silicon carbide-based composite material, and silicon nitride are preferred, and silicon carbide and a silicon-silicon carbide-based composite material are more preferred.

Such honeycomb-like base material **11a** is typically produced by the following method. First, a binder and water or an organic solvent are added to material powder including ceramic powder described above as required. The resultant mixture is kneaded to provide a body, and the body is molded (typically extruded) into a desired shape. After that, the body is dried, and is fired as required. Thus, the honeycomb-like base material **11a** is produced. When the firing is adopted, the body is fired at, for example, from 1,200°C to 1,500°C. A firing time period is, for example, 1 hour or more and 20 hours or less.

### B-2-2. Acid Gas Adsorption Layer (Carbon Dioxide Adsorption Layer)

In one embodiment, the acid gas adsorption material layer **16** is formed on the surface of the partition wall **13** in the cell **14.** In the honeycomb-like base material **11a,** a flow passage **15** is formed in a portion (typically, a center portion) in a cross section of the cell **14** in which the acid gas adsorption material layer **16** is not formed. The acid gas adsorption material layer **16** may be formed on the entire inner surface of the partition wall **13** (specifically, so as to surround the flow passage **15)** as in the illustrated example, or may be formed on part of the surface of the partition wall. When the acid gas adsorption material layer **16** is formed on the entire inner surface of the partition wall **13,** an improvement in acid gas (typically, CO₂) adsorption efficiency can be achieved.

The flow passage **15** extends from the first end surface **E1** (inflow end surface) to the second end surface **E2** (outflow end surface) as with the cells **14.** Examples of the sectional shape of the flow passage **15** include the same sectional shapes as those of the cells **14** described above. Of those, for example, a hexagon or a quadrangle is preferred, and a square, a rectangle, or a hexagon is more preferred. The sectional shapes and sizes of the flow passage 15 may be all the same, or may be at least partly different.

The gas to be treated containing the acid gas is typically supplied to the cells **14** (more specifically, the flow passages **15)** in an adsorption step described later, and the first gas flows through the cells **14** in the desorption step described later.

The acid gas adsorption material layer **16** includes the acid gas adsorption material in accordance with the acid gas to be adsorbed. When the acid gas is CO₂, the acid gas adsorption material layer **16** includes the above-mentioned carbon dioxide adsorption material.

The acid gas adsorption material layer may be formed only of the acid gas adsorption material. In this case, the acid gas adsorption material is directly supported by the partition wall **13** to face the flow passage. When the acid gas adsorption material layer is formed only of the acid gas adsorption material, the content ratio of the acid gas adsorption material in the acid gas adsorption material layer is typically 95.0 mass% or more and 100 mass% or less. When the content ratio of the acid gas adsorption material falls within the above-mentioned range, excellent acid gas adsorption efficiency can be stably ensured.

In one embodiment, the acid gas adsorption material layer **16** includes a porous carrier in addition to the above-mentioned acid gas adsorption material. In this case, the acid gas adsorption material is typically supported by the porous carrier to face the flow passage. When the acid gas adsorption material layer includes the porous carrier, the escape of the acid gas adsorption material from the acid gas adsorption material layer can be prevented in the adsorption step and/or the desorption step.

The porous carrier may form mesopores in the acid gas adsorption material layer. Examples of the porous carrier include: metal organic frameworks (MOF), such as MOF-74, MOF-200, and MOF-210; activated carbon; nitrogen-doped carbon; mesoporous silica; mesoporous alumina; zeolite; a carbon nanotube; and a fluorinated resin such as polyvinylidene fluoride (PVDF). Of those, for example, metal organic frameworks (MOF), activated carbon, PVDF, zeolite, mesoporous silica, and mesoporous alumina are preferred. Those porous carriers may be used alone or in combination thereof. A material different from that of the acid gas absorption material is preferably adopted for the porous carrier.

The BET specific surface area of the porous carrier is, for example, 50 m²/g or more, preferably 500 m²/g or more. When the surface area of the porous carrier is equal to or more than the above-mentioned lower limits, the acid gas adsorption material can be stably supported, and hence an improvement in acid gas adsorption efficiency can be achieved. The upper limit of the BET specific surface area of the porous carrier is typically 2,000 m²/g or less.

When the acid gas adsorption material layer includes the acid gas adsorption material and the porous carrier, the content ratio of the total of the acid gas adsorption material and the porous carrier in the acid gas adsorption material layer is, for example, 30 mass% or more, preferably 50 mass% or more, and is, for example, 100 mass% or less, preferably 99 mass% or less.

The content ratio of the acid gas adsorption material in the acid gas adsorption material layer is, for example, 30 mass% or more, preferably 50 mass% or more, and is, for example, 99 mass% or less. The content ratio of the porous carrier is, for example, 0.01 part by mass or more, preferably 0.3 part by mass or more, and is, for example, 0.7 part by mass or less, preferably 0.5 part by mass or less with respect to 1 part by mass of the acid gas adsorption material. When the content ratio of the porous carrier falls within the above-mentioned ranges, the acid gas adsorption material can be more stably supported.

Such an acid gas adsorption material layer is typically produced by the following method. A solution of the acid gas adsorption material is prepared by dissolving the above-mentioned acid gas adsorption material in a solvent. Further, the above-mentioned porous carrier is added to the solvent as required. The order of addition of the acid gas adsorption material and the porous carrier is not limited to any particular order. After that, the solution of the acid gas adsorption material is applied onto the base material (specifically, the partition walls), and the coating film is then dried, and is sintered as required. Thus, the acid gas adsorption material layer is formed.

### C. Acid Gas Capture Method

Next, an acid gas capture method according to another aspect of the present disclosure is described with reference to FIG. **1A** and FIG. **5** to FIG. **8****.** The acid gas capture method typically includes an adsorption step, a discharge step, and a desorption step in the stated order.

As illustrated in FIG. **1A****,** in the adsorption step, a gas to be treated is supplied to the acid gas adsorption part **1** positioned in the first flow passage **21** of the housing part **2** to cause the acid gas adsorption material to adsorb an acid gas. In the illustrated example, the first valve **51** and the second valve **52** are set to be in an opened state, and the gas to be treated containing the acid gas is supplied to the first flow passage **21** of the housing part **2** through the first inflow port **22.** In this case, the gas to be treated containing the acid gas passes through the acid gas adsorption part 1. As a result, the acid gas adsorption material included in the acid gas adsorption part 1 adsorbs the acid gas (typically, CO₂) to separate the acid gas from the gas to be treated.

A temperature (adsorption temperature) of the acid gas adsorption part in the adsorption step is, for example, 0°C or more, preferably 10°C or more, and is, for example, 50°C or less, preferably 40°C or less. In one embodiment, the adsorption temperature is equal to an outside air temperature. The adsorption temperature can be checked, for example, by measuring the temperature of the treated gas at the first outflow port with any appropriate thermometer.

An operation time period of the adsorption step (adsorption time) is, for example, 15 minutes or more, preferably 30 minutes or more, and is, for example, 3 hours or less, preferably 2 hours or less.

When the adsorption temperature and/or the adsorption time falls within the above-mentioned ranges, the adsorption gas adsorption material can efficiently adsorb the acid gas.

An acid gas adsorption rate in the adsorption step (=100-(concentration of the acid gas in the treated gas having passed through the acid gas adsorption part/concentration of the acid gas in the gas to be treated before being supplied to the acid gas adsorption part×100)) is, for example, 60% or more, preferably 75% or more, more preferably 80% or more, and is, for example, 90% or less.

Next, in the discharge step, the gas to be treated is discharged from the acid gas adsorption part 1, and the temperature of the acid gas adsorption part 1 is increased to a predetermined desorption temperature.

As a method of discharging the gas to be treated, any appropriate measure may be adopted. Examples of the method of discharging the gas to be treated include a method involving replacing the inside of the acid gas adsorption part by another gas, and a method involving extracting the gas to be treated in the acid gas adsorption part by decompression. The method of discharging the gas to be treated may be applied alone or in combination.

As a method of increasing the temperature of the acid gas adsorption part, any appropriate measure may be adopted. Examples of the method of increasing the temperature of the acid gas adsorption part include a method involving supplying a heating medium at a temperature higher than the adsorption temperature to the acid gas adsorption part, and a method involving directly heating the acid gas adsorption part with a heating element. The method of increasing the temperature of the acid gas adsorption part may be applied alone or in combination.

The method of discharging the gas to be treated and the method of increasing the temperature of the acid gas adsorption part may be performed in any appropriate combination in the discharge step.

In the discharge step, at least part of the acid gas desorbed from the acid gas adsorption material and discharged from the acid gas adsorption part **1** at the time of an increase in temperature of the acid gas adsorption part **1** is returned to the first flow passage **21** of the housing part **2** by the return part **3.** In the discharge step, typically, the first valve **51** and the second valve **52** are set to be in a closed state, and the first valve **51** and the second valve **52** in a closed state, and a portion of the housing part **2** therebetween define the housing space **S** in which the acid gas adsorption part **1** is positioned.

In the discharge step, the decompression device **6** is preferably driven to decompress the housing space **S.** The pressure of the housing space **S** is, for example, 0.1 MPaA (absolute pressure) or less, preferably 0.04 MPaA or less, and is, for example, 0.001 MPaA or more.

The operation time period of the discharge step is, for example, 3 minutes or more, preferably 5 minutes or more, and is, for example, 15 minutes or less, preferably 10 minutes or less.

In one embodiment, the discharge step includes a primary replacement step and a secondary replacement step. In the primary replacement step, the first gas is supplied to the acid gas adsorption part **1** to replace the inside of the acid gas adsorption part **1** from the gas to be treated to the first gas. In the secondary replacement step, the supply of the first gas to the acid gas adsorption part **1** is maintained, and the temperature of the acid gas adsorption part **1** is increased to a predetermined desorption temperature. In the secondary replacement step, the second gas containing the acid gas desorbed from the acid gas adsorption material at the time of an increase in temperature of the acid gas adsorption part **1** and the first gas is returned to the first flow passage **21.**

According to such a method, the inside of the acid gas adsorption part can be smoothly replaced by the first gas, and the second gas containing the acid gas and the first gas can be returned to the first flow passage at the time of an increase in temperature of the acid gas adsorption part. Thus, the purity of the acid gas to be captured and the capture efficiency of the acid gas can be improved.

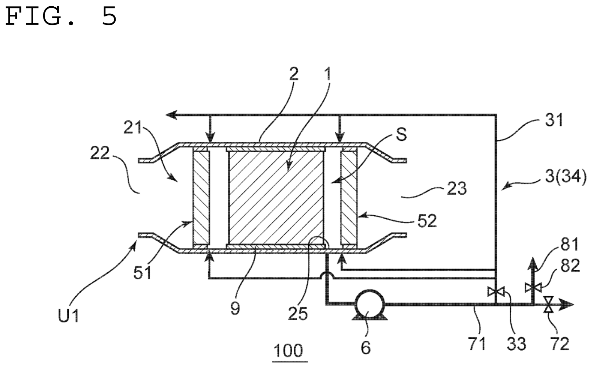

As illustrated in FIG. **5****,** in the primary replacement step, typically, the first gas is supplied from a first gas supply part (not shown) to the housing space **S** in which the acid gas adsorption part **1** is positioned. Thus, the first gas is supplied to the acid gas adsorption part **1.**

Examples of the first gas include water vapor, CO₂, and an acid gas captured in advance by the acid gas capture system (hereinafter referred to as "captured gas"). The first gases may be used alone or in combination.

In addition, the on-off valve **33** and the on-off valve 72 are set to be in a closed state, and the on-off valve **82** is set to be in an opened state. Then, as indicted by the thick line in FIG. **5****,** the gas to be treated remaining in the housing space **S** passes through the second outflow port **25,** the outflow line **71,** and the exhaust line **81** in the stated order to be discharged together with the first gas. As a result, the inside of the housing space **S** in which the acid gas adsorption part **1** is positioned is replaced from the gas to be treated to the first gas.

In the primary replacement step, the acid gas adsorption part **1** is not substantially heated, and the temperature of the acid gas adsorption part **1** is maintained at, for example, the above-mentioned adsorption temperature. The temperature of the acid gas adsorption part **1** in the primary replacement step can be checked, for example, by measuring the temperature of the gas discharged from the second outflow port with any appropriate thermometer. The pressure of the housing space **S** in the primary replacement step is maintained in, for example, the above-mentioned ranges.

The operation time period of the primary replacement step (primary replacement time) is, for example, 1 minute or more, preferably 3 minutes or more, and is, for example, 10 minutes or less, preferably 8 minutes. When the primary replacement time is equal to or more than the above-mentioned lower limit, the inside of the housing space can be stably replaced by the first gas. When the primary replacement time is equal to or less than the above-mentioned upper limit, unintentional desorption of the acid gas from the acid gas adsorption material can be prevented in the primary replacement step.

Then, in the secondary replacement step, the supply of the first gas to the acid gas adsorption part 1 is maintained, and the temperature of the acid gas adsorption part **1** is increased to a predetermined desorption temperature. In the illustrated example, the temperature of the acid gas adsorption part 1 is increased with the heating element **9.**

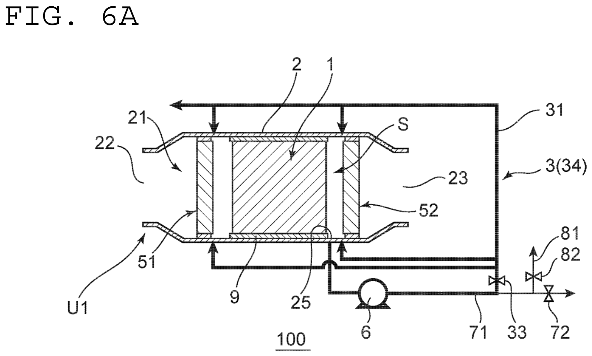

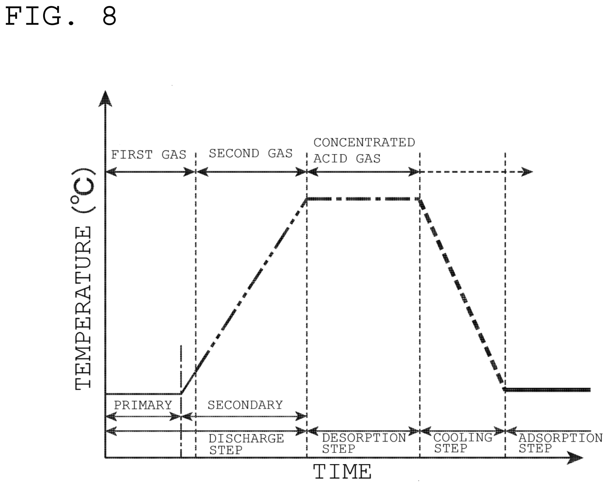

In one embodiment, as illustrated in FIG. **6A****,** when the acid gas adsorption part **1** reaches a switching temperature, the return of the second gas by the return part **3** is started (see FIG. **8****).** The second gas contains the acid gas desorbed from the acid gas adsorption material at the time of an increase in temperature of the acid gas adsorption part 1 and the first gas supplied to the housing space **S.**

The switching temperature is more than the above-mentioned adsorption temperature and less than the desorption temperature described later. The switching temperature is, for example, 50% or more, preferably 60% or more, and is, for example, 80% or less, when the desorption temperature is assumed to be 100%. When the switching temperature falls within the above-mentioned ranges, the discharge of the acid gas desorbed from the acid gas adsorption material during an increase in temperature of the acid gas adsorption part to the outside of the acid gas capture system can be stably prevented.

In addition, the criteria for the start of the return of the second gas by the return part **3** are not limited to temperature conditions. For example, the return of the second gas by the return part **3** may be started when the oxygen concentration in the gas discharged from the second outflow port **25** reaches 15 vol% or less.

Specifically, when the conditions for the start of the return of the second gas by the return part **3** are satisfied, the on-off valve **33** is set to be in an opened state, and the on-off valve **82** is set to be in a closed state. As a result, the housing part **2,** the first valve **51** and the second valve **52** that are in a closed state, the outflow line **71,** and the return part **3** form a closed line. As indicated by the thick line in FIG. **6A****,** at least part of the second gas passes through the second outflow port **25,** the outflow line **71,** and the return flow passage **34** of the return part **3** in the stated order, to be returned to the housing space **S** of the housing part **2.** That is, the second gas circulates through the closed line. Along with an increase in temperature of the acid gas adsorption part **1,** the amount of the acid gas desorbed from the acid gas adsorption material is increased, and hence the concentration of the acid gas in the second gas circulating through the closed line is increased (see FIG. **8****).** Part of the second gas may be supplied to the flow passage of the housing part of another adsorption unit **U** without being returned to the housing space **S** of the housing part **2** of the first adsorption unit **U1** (see FIG. **1B****).**

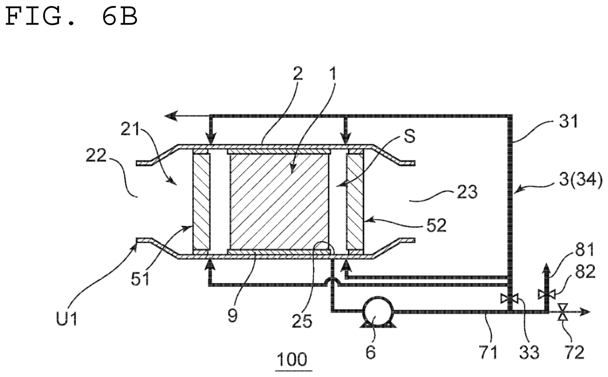

In addition, as illustrated in FIG. **6B****,** as long as at least part of the second gas is returned to the housing space S of the housing part **2** of the first adsorption unit **U1,** the remaining part of the second gas may be discharged from the exhaust line **81.** In this case, the on-off valve **33** and the on-off valve **82** are set to be in an opened state. As a result, part of the second gas is returned to the housing space S of the housing part **2** in the same manner as in the foregoing, and the remaining part of the second gas passes through the exhaust line **81** to be discharged.

In such a secondary replacement step, the oxygen concentration in the second gas to be returned by the return part **3** is preferably 15.0 vol% or less. When the oxygen concentration in the second gas falls within such a range, the oxygen concentration in the housing space can be reduced in the secondary replacement step, and as a result, the purity of the acid gas (concentrated acid gas) to be captured in the desorption step can be further improved. The oxygen concentration in the second gas can be measured, for example, by using any appropriate oxygen concentration meter on part of the second gas immediately before being returned to the housing part **2** (typically, in the downstream end portion of the return line 31).

In the secondary replacement step, the pressure in the first flow passage **21** of the housing part **2** (specifically, the housing space **S)** is typically lower than the pressure in the return flow passage **34** of the return part **3.** The pressure in the housing space **S** in the secondary replacement step is maintained, for example, in the above-mentioned ranges.

The differential pressure between the housing space **S** and the return flow passage **34** (pressure in the return flow passagepressure in the housing space) is preferably 60 kPa or more. When the differential pressure between the housing space and the return flow passage falls within such a range, the second gas to be returned by the return part is allowed to smoothly flow into the housing space.

Secondary replacement time is, for example, 1 minute or more, preferably 2 minutes or more, and is, for example 5 minutes or less, preferably 3 minutes or less. When the secondary replacement time is equal to or more than the above-mentioned lower limit, a high-purity acid gas is obtained. When the secondary replacement time is equal to or less than the above-mentioned upper limit, a decrease in capture efficiency of the acid gas can be suppressed.

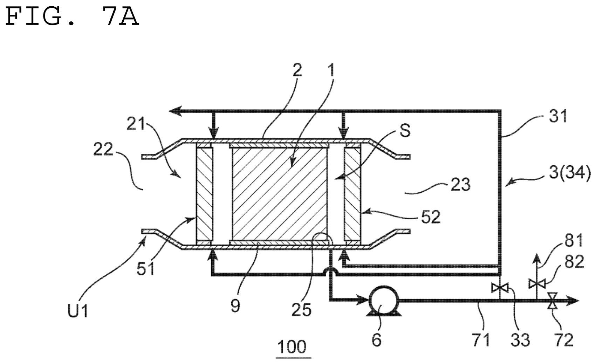

When the acid gas adsorption part **1** reaches the desorption temperature, the desorption step is started as illustrated in FIG. **7A****.** More specifically, after the temperature of the acid gas adsorption part 1 is increased to the desorption temperature, the acid gas adsorption part **1** is maintained at the desorption temperature for predetermined desorption time (see FIG. **8****).** As a result, the acid gas adsorbed by the acid gas adsorption material in the adsorption step is sufficiently desorbed from the acid gas adsorption material.

The desorption temperature is, for example, 70°C or more, preferably 80°C or more, and is, for example, 200°C or less, preferably 110°C or less. The desorption temperature can be checked, for example, by measuring the temperature of the gas immediately after being discharged from the second outflow port with any appropriate thermometer.

An operation time period of the desorption step (time period for which the acid gas adsorption part is maintained at the desorption temperature) is, for example, 1 minute or more, preferably 5 minutes or more, and is, for example, 1 hour or less, preferably 30 minutes or less.

In the illustrated example, the on-off valve **72** is set to be in an opened state, and the on-off valve **33** is set to be in a closed state. In addition, the decompression device **6** is driven to suck the acid gas in the housing space **S.**

The range of the pressure of the housing space **S** in the desorption step is, for example, the same as the above-mentioned ranges of the pressure of the housing space **S** in the discharge step.

Then, as indicated by the thick lines in FIG. **7A****,** the acid gas (concentrated acid gas) desorbed from the acid gas adsorption material is sucked from the housing space **S** and passes through the second outflow port **25** and the outflow line **71** in the stated order to be captured.

The purity of the concentrated acid gas is, for example, 50 vol% or more, preferably 80 vol% or more, and is, for example, 100 vol% or less. When the purity of the concentrated acid gas is less than 100 vol%, the concentrated acid gas is a mixed gas of the acid gas and another gas (typically, the first gas).

In one embodiment, in the desorption step, the second gas is supplied to the housing space **S** of the housing part **2** through the return part **3.** In this case, typically, in the discharge step, part of the second gas is stored in a storage part (not shown), and the second gas is supplied from the storage part to the return line 31. As a result, even in the desorption step, the suction of an unintended gas to the housing space can be prevented.

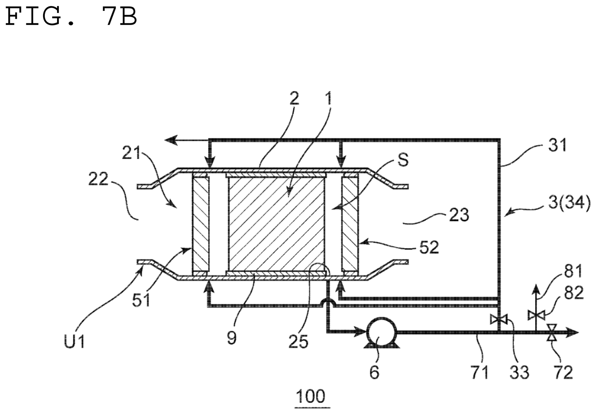

In addition, as illustrated in FIG. **7B****,** in the desorption step, part of the concentrated acid gas may be returned to the housing space **S** of the housing part **2** by the return part **3.** In this case, the on-off valve **72** and the on-off valve **33** are set to be in an opened state. As a result, the concentrated acid gas is allowed to circulate through the above-mentioned closed line, thereby being capable of further improving the purity of the concentrated acid gas to be captured.

As illustrated in FIG. **8****,** the acid gas capture method may include a cooling step in addition to the adsorption step, the discharge step, and the desorption step. The cooling step is performed after the desorption step and before the adsorption step, to cool the acid gas adsorption part to the above-mentioned adsorption temperature. Although not shown, in the cooling step, the acid gas adsorption part may be cooled while the second gas is supplied to the acid gas adsorption part through the return part. The adsorption step, the discharge step, the desorption step, and the cooling step are preferably performed repeatedly in the stated order.

### Industrial Applicability

The acid gas capture system and the acid gas capture method according to the embodiment of the present disclosure can be used for separation and capture of an acid gas, and particularly, can be suitably used for a Carbon dioxide Capture, Utilization and Storage (CCUS) cycle.

### Reference Signs List

- 1: acid gas adsorption part

- **2**: housing part
- **21**: first flow passage
- **22**: first inflow port
- **23**: first outflow port
- **25**: second outflow port
- **3**: return part
- **34**: return flow passage
- **51**: first valve
- **52**: second valve
- **6**: decompression device

## Claims

1. An acid gas capture system, comprising:
an acid gas adsorption part including an acid gas adsorption material capable of adsorbing an acid gas contained in a gas to be treated and capable of desorbing the adsorbed acid gas;
a housing part, which includes a first flow passage to which the gas to be treated is to be supplied, the housing part being configured to house the acid gas adsorption part so that the acid gas adsorption part is positioned in the first flow passage; and
a return part including a return flow passage through which at least part of the acid gas desorbed from the acid gas adsorption material and discharged from the acid gas adsorption part is allowed to be returned to the first flow passage of the housing part.

2. The acid gas capture system according to claim 1, wherein the housing part includes:
a first inflow port positioned in an upstream end portion in a supply direction of the gas to be treated;
a first outflow port positioned in a downstream end portion in the supply direction of the gas to be treated; and
a second outflow port positioned between the first inflow port and the first outflow port.

3. The acid gas capture system according to claim 2, further comprising:
a first valve, which is configured to open and close the first flow passage, and which is positioned on an upstream side of the acid gas adsorption part in the supply direction of the gas to be treated; and
a second valve, which is configured to open and close the first flow passage, and which is positioned on a side opposite to the first valve with respect to the acid gas adsorption part,
wherein the first valve and the second valve are each configured to partition the first flow passage to define a housing space in which the acid gas adsorption part is arranged, when the first valve and the second valve are in a closed state,
wherein the second outflow port is positioned between the first valve and the second valve, and
wherein the return part is configured to return at least part of the acid gas discharged from the second outflow port to the housing space.

4. The acid gas capture system according to claim 3, further comprising a decompression device configured to decompress the housing space.

5. The acid gas capture system according to claim 1,
wherein the acid gas adsorption part and the housing part are configured to form a first adsorption unit,
wherein the acid gas capture system further comprises a second adsorption unit,
wherein the second adsorption unit further includes:
a second acid gas adsorption part including an acid gas adsorption material capable of adsorbing an acid gas contained in a gas to be treated and capable of desorbing the adsorbed acid gas; and
a second housing part, which includes a second flow passage to which the gas to be treated is to be supplied, the second housing part being configured to house the second acid gas adsorption part so that the second acid gas adsorption part is positioned in the second flow passage, and
wherein the return part is configured to return at least part of the acid gas to the first flow passage of the housing part, and to supply the at least part of the acid gas to the second flow passage of the second housing part.

6. The acid gas capture system according to any one of claims 1 to 5, wherein the acid gas is carbon dioxide.

7. An acid gas capture method, comprising:
an adsorption step of supplying a gas to be treated containing an acid gas to a first flow passage of a housing part in which an acid gas adsorption part including an acid gas adsorption material is arranged, to cause the acid gas adsorption material to adsorb the acid gas;
a discharge step of increasing a temperature of the acid gas adsorption part to a predetermined desorption temperature, and discharging the gas to be treated from the acid gas adsorption part; and
a desorption step of desorbing the acid gas from the acid gas adsorption material under a state in which the acid gas adsorption part is maintained at the desorption temperature,
wherein, in the discharge step, at least part of the acid gas desorbed from the acid gas adsorption material and discharged from the acid gas adsorption part at the time of the increase in temperature of the acid adsorption part is returned to the first flow passage.

8. The acid gas capture method according to claim 7,
wherein the discharge step includes:
a primary replacement step of supplying a first gas to the first flow passage to replace an inside of the acid gas adsorption part from the gas to be treated to the first gas; and
a secondary replacement step of maintaining the supply of the first gas to the first flow passage, and increasing a temperature of the acid gas adsorption part to a predetermined desorption temperature,
wherein, in the secondary replacement step, a second gas containing the acid gas desorbed from the acid gas adsorption material at the time of the increase in temperature of the acid gas adsorption part and the first gas is returned to the first flow passage.
